# EUROPEAN PATENT SPECIFICATION

(11) **EP 2 737 405 B1**
(45) Date of publication and mention of the grant of the patent: **06.03.2019**
(21) Application number: 12714985.4
(22) Date of filing: 29.03.2012
(51) Int. Cl.: G06F 11/32, G06F 9/451

(54) **SYSTEMS AND METHODS FOR DATABASE USAGE VISUALIZATION**
SYSTEME UND VERFAHREN ZUR VISUALISIERUNG EINER DATENBANKVERWENDUNG
SYSTÈMES ET PROCÉDÉS DE VISUALISATION D'UTILISATION DE BASE DE DONNÉES

(30) Priority: 29.07.2011 US 201161513102 P
(43) Date of publication of application: 04.06.2014
(73) Proprietor: Starcounter AB, 114 39 Stockholm (SE)
(72) Inventor: WESTER, Joachim, 118 20 Stockholm (SE)
(74) Representative: Phillips & Leigh LLP
(86) International application number: PCT/EP2012/055614
(87) International publication number: WO 2013/017296

(56) References cited:
- US-A1- 2007 124 676

## Description

### FIELD OF THE INVENTION

The present invention generally relates to database monitoring and more specifically relates to database usage visualization.

### BACKGROUND

Conventional database systems typically include monitoring systems to allow a user to monitor system resources such as processor and memory usage. For example, a database management system may provide numerical statistics such as transactions per minute, average and peak processor usage, average and peak memory usage, and number of users. However, such statistics are typically visible only as numbers or graphs. And while these numbers can be updated in real time or near real time, they only provide coarse information about database usage.

Additional information is typically available in database log files, which may include information about specific transactions, such as specific requests, response times, and errors. However, database log files are typically extremely lengthy and difficult to interpret, especially when it may be necessary to debug a problem with the database. US2007/0124676 discloses a method, article of manufacture and apparatus for playing back recorded database activity in a graphical user interface, comprising features according to the preamble of claim 1.

### STATEMENT OF INVENTION

The present invention provides systems and methods for database usage visualization as set forth in the appended claims.

Illustrative examples are discussed in the Detailed Description, and further description of the invention is provided there. Advantages offered by various examples of this invention may be further understood by examining this specification.

### BRIEF DESCRIPTION OF THE DRAWINGS

These and other features, aspects, and advantages of the present invention are better understood when the following Detailed Description is read with reference to the accompanying drawings, wherein:
Figure 1 shows a virtual physical environment according to one example of the present invention;
Figures 2 and 3 show systems for database usage visualization according to examples of the present invention;
Figures 4-13 show a virtual physical environment for database usage visualization according to one example of the present invention; and
Figure 14 shows a method for database usage visualization according to one example of the present invention.

### DETAILED DESCRIPTION

Examples of the present invention provide systems and methods for database usage visualization. The following disclosed examples are intended to provide illustrative examples of examples of systems and methods for database usage visualization. This disclosure is not intended to be exhaustive, and other examples are within the scope of this disclosure. The following paragraphs provide some general discussion intended to introduce terminology used throughout this disclosure. It is intended to provide context for some disclosed examples, but is not intended to limit the scope of this disclosure in any way.

### Illustrative Database Usage Visualization

In one illustrative example of the present invention, a database visualization system allows a user to visually monitor database usage. For example, a database may comprise a typical relational database (RDBMS) or object-oriented database system. Alternatively, a database may comprise other kinds of databases, such as a virtual machine database (VMDBMS) that is maintained by an application server and is directly accessible by an application without an intermediate database management system, such as is described in International Patent Specification No. WO 2011/038770 A1 published 7 April 2011 entitled "Systems and Methods for Managing Databases."

In this illustrative example, the database monitoring system is configured to monitor an object-oriented VMDBMS having two database classes. Each database class may be instantiated one or more times within the database to store records of objects used by various applications with access to the database.

To allow visualization of database usage, the illustrative system displays a virtual physical environment 100. In this illustrative example, the virtual physical environment 100 is a two-dimensional region and includes two virtual physical objects 110, 112, each of which represents one of the database classes. The virtual physical objects 110, 112 are displayed as disks within the virtual physical environment 100. Instances of the database classes are represented as virtual particles 120, 122 within the virtual physical environment 100. When a new record is added to the database, a new instance of a class is created to store the record. In addition, a new virtual particle 120 is created and displayed within the virtual physical environment 100.

To allow the virtual physical environment 100 to provide useful monitoring capabilities, the virtual physical environment 100 simulates a physical system. The physical system may be gravitational, thermodynamic, electromagnetic, electrostatic, quantum mechanical, or have other user-defined properties. In this example, the physical system is gravitational (Newtonian), wherein each virtual physical object 110, 112 has a simulated mass. In addition, each virtual particle 120, 122 also has a simulated mass. And while each virtual physical object 110, 112 is fixed at its location, each virtual particle within the virtual physical environment 100 is capable of movement and is drawn by a simulated gravitational force towards its corresponding virtual physical object 110, 112 based on the database class from which it is instantiated. Thus, when a new virtual particle 120 is created, it is displayed at or near a designated starting position and is drawn towards its corresponding virtual physical object 110, as is illustrated by path 130. Once the virtual particle 120 arrives at its virtual physical object 110, it begins to orbit the virtual physical object 110. After a few seconds, the virtual particle 120 disappears or is absorbed by the virtual physical object 110 to reduce visual clutter within the environment 100. When the virtual particle 120 is absorbed by the virtual physical object 110, the radius of the virtual physical object 110 increases proportionally to the number of virtual particles absorbed by the virtual physical object 110 such that the size of the virtual physical object 110 provides a visual indication of the number of instances of the class that are present in the database. Thus, a virtual physical object 110 having only a single virtual particle might have a volume comparable to a single virtual particle 120, while an object 110 having one million virtual particles might have a volume one million times the volume of a single virtual particle. In one example, to prevent wildly differently-sized virtual physical objects, the size of a virtual physical object may increase at a logarithmic rate.

At a later time, a record may be requested from the database. If the virtual particle is not already visible, to indicate a database record has been accessed, the virtual particle 122 is "ejected" from its corresponding virtual physical object 112 based on an initial velocity or a simulated impulse force. Because of the simulated gravitational pull of the virtual physical object 112, the virtual particle 122 moves some distance away from the virtual physical object 112 before it is drawn back to the virtual physical object 112, as shown by path 132. As described above, the virtual particle 122 then briefly orbits the virtual physical object 112 before being re-absorbed. Alternatively, if the virtual particle 122 is already visible, the virtual particle 122 will flash, change color, or otherwise be emphasized for the user. For example, for a record that is being deleted, a darkened or blackened virtual particle may be displayed with a surrounding halo.

By using such a virtual physical environment 100 having virtual physical objects 110, 112 and virtual particles 120, 122, a database administrator or other user may be able to view database usage in real-time in an intuitive graphical environment. Further, because people tend to have intuitive understanding of physical systems operating based on familiar physics principles, such a monitoring system may be easy to learn. After gaining familiarity with a particular database, a user may be able to quickly detect particular errors or problems based on familiar movement patterns of virtual particles within the environment 100. Moreover, a database administrator may be able to easily identify access patterns or bottlenecks and perform database optimizations.

### Graphical Representation of Database Records and Objects

Examples of the present invention provide systems and methods for database usage visualization. Some examples provide a graphical representation of a database and database activity by simulating a physical environment representing records in the database and their respective associated database objects. For example, as introduced above in the illustrative example, a database may have a plurality of database objects, such as tables or classes, that are used to store data in the database. For example, a table in a relational database typically comprises one or more rows, where each row corresponds to a database record and comprises one or more columns. Each column in a row contains a data element of the particular database record, and all rows in the same table share the same set of columns. Similarly, each class in an object database serves as a template for database records stored as instances of the class. To then visually represent these database objects and database records, various examples of the present invention represent these components as simulated physical constructs within a virtual physical environment. The virtual physical environment may be constructed to have various rules based on real-world laws of physics, such as gravitation or electromagnetism, to allow the various constructs to interact and move within the virtual physical environment. Thus, database activity is represented by the movement and interactions of various simulated physical constructs. By displaying these movements and interactions to a user, the user may be able to view database activity in the context of a familiar and intuitive framework - a simulated physical environment

The human brain is generally regarded as being hard wired to operate in a physical world. The amount of information that a person can process, understand and analyze for abnormalities is typically much greater when processed through the eyes in the form of visual representations abiding by laws of physics. For example, the speed with which a human can evaluate and foresee the future path of a bouncing ball is much greater than the speed she would be able to foresee the same path using tables and charts describing forces and state information about the ball. Thus, examples of the present invention are designed to show database activity at a relatively granular level, at the level of individual transactions, and not just as high level performance counters, such as counts showing database accesses per second, to provide easy to understand information about database usage.

In addition, examples of the present invention provide an overview of what a database is doing at a high level, such as that a large number of transactions are occurring, or that a particular database table or class is being heavily accessed. The ability of a human administrator to determine what is happening in detail or what is happening overall within the database should be significantly improved based on an intuitive understanding of the simulated physical environment and with minimal need of interaction with the database. The human brain has evolved to intuitively understand three-dimensional environments that act according to physical laws, and thus, while a large number of database transactions may be occurring, resulting in large volumes of complex data describing the database operations, a human operator is typically well-suited to process such data when presented visually. For example, while the amount of data needed to describe the movement of grains of sand in a sandstorm or liquid being poured from a bottle may be very large, a human can generally perceive and understand the sandstorm or liquid movement very easily. Thus, while typical record accesses may react according to a simulated physical response, an error condition or abnormal access may be represented with an abnormal physical response. For example, a virtual particle may be less constrained by gravitational forces. Such a response may stand out to a human observer and thus may provide an easily identifiable error within even a large number normal accesses. Further, such simulated physical responses may not exactly model a real-world physical system, but may instead be tailored to respond in a way a person may expect the system to respond under a particular condition.

Thus, examples of the present invention simulate physical environments with various simulated physical constructs representing database records and database objects. In addition, each of these constructs has properties that can be affected to cause the construct to react within the simulated environment (also referred to herein as a virtual physical environment) according to programmed rules.

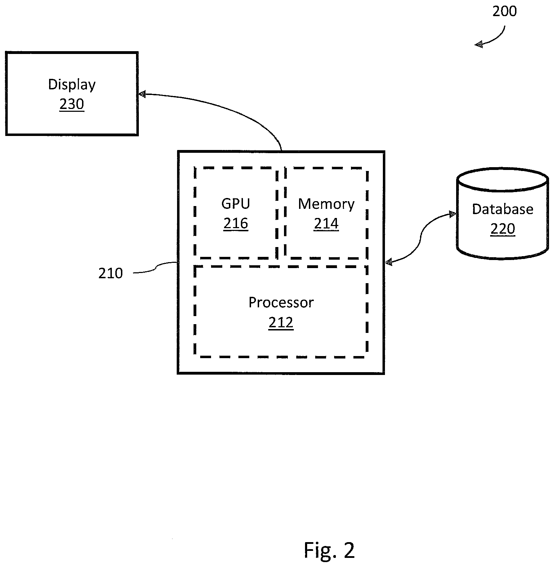

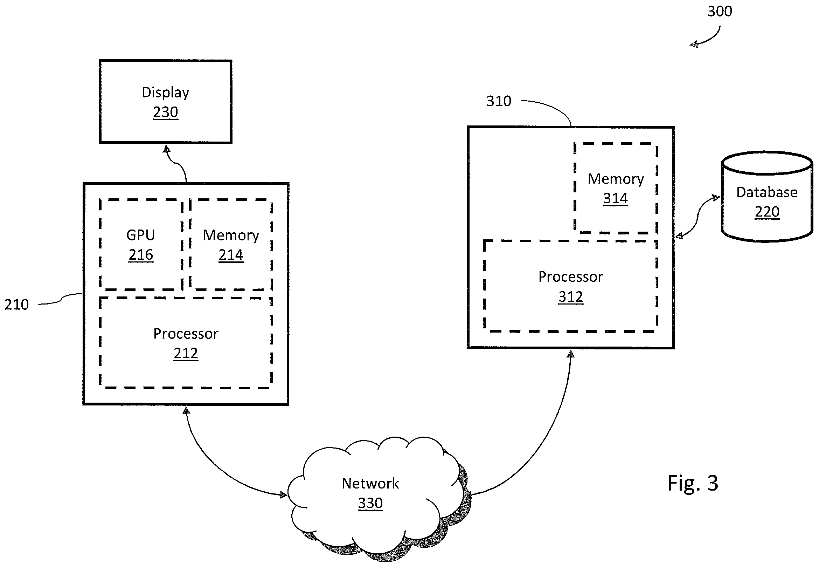

Referring now to Figure 2, Figure 2 shows a system 200 for visualizing database usage according to one example of the present invention. The system 200 comprises a computer 210 having a processor 212, a memory 214 and a graphics processing unit (GPU) 216. The computer 210 is in communication with a database 220 and a display 230. In one example, the computer 210 itself manages the database 220, such as by operating a database management system (DBMS) and providing master storage for the database. In some examples, however, a remote computer may execute a DBMS and the computer 210 may communicate with such remote computer. One such example is shown in Figure 3.

In the example shown in Figure 2, the processor 212 is configured to execute program code stored in memory 214. Different examples may comprise different types of processors 212 and memories 214, which are described in greater detail below. The GPU 216 comprises a specialized processor configured for graphics processing. Such processors are commonly available from vendors such as nVidia® and ATI® and frequently comprises a plurality of CPU cores well-suited to performing high-speed parallel vector computations that are typically used in rendering three-dimensional scenes. Such a GPU is typically in communication with processor 212 and memory 214 using a high-speed, high-bandwidth expansion bus, such as a PCI-Express bus. While the example shown in Figure 2 only comprises a single GPU, some examples may employ multiple GPUs. For example, one example comprises multiple GPUs in communication with each other using a scalable link interface (SLI) communication method to distribute processing load across the multiple GPUs. By offloading graphics processing to the GPUs, including physics calculations of virtual particle movements, it may be possible to significantly reduce the processing burden on the processor 212 to allow it to handle other tasks. However, it is not necessary to use a GPU, particularly if database activity is expected to be relatively low.

In some examples, the GPU 216 may be in communication with the memory 214, at least in part, using direct memory access (DMA). DMA typically allows high-speed, bulk data transfers between memory and a device or peripheral. Thus, DMA may increase throughput of virtual particles from memory 214 to the GPU 216 for processing and display and allow for an increased number of virtual particles to be managed and updated by the system 200, while still maintaining a reasonable frame rate. This may allow the system 200 to display a real-time, or near-real time, view of virtual particle movements within the virtual physical environment representing database usage.

Referring now to Figure 3, Figure 3 shows a system for database usage visualization according to one example of the present invention. The example shown in Figure 3 comprises a display computer 210, comprising the computer 210 shown in Figure 2, which is in communication with a network 330, and a remote computer 310. The remote computer 310 comprises a processor 312 and a memory 314 and is in communication with the database 220 and the network 330. The remote computer 310 is configured to be a database server and to execute a DBMS to manage the database 220. The remote computer 310 (or database server 310) is also configured to provide information associated with database events to the display computer 210.

In one example, the database server 310 is configured to log database access events (such as create, insert, read, update, or delete events) and to send virtual particle information to the display computer 210. In one example, the database server 310 forwards database event information as database events occur. For example, in one example comprising a relational database, for each event, the database server 310 forwards the name of the table(s) accessed, the type of access event, and the associated record(s) affected by the access. Such an example may not be well-suited to high-volumes of transactions, but illustrates one example.

In one example that may be well-suited to a database environment with high numbers of transactions, the database server comprises multiple processors 312, or a CPU with multiple processor cores. In such an example, each processor may be assigned a circular buffer allocated in memory 314 for storing and queuing database access event information. For clarity, the following description will only refer to a single processor 312, though it will be equally applicable to each of the plurality of processors or processor cores in this example.

In this example, the processor 312 is configured to generate a virtual particle with information associated with a particular database record or records based on a database access event. For example, a database access event may be an insert or create operation where the DBMS executing on the database server 310 receives a request to add a record to the database. In such a case, the processor 312 would generate a virtual particle with parameters relating to the access event, such as the primary key of the database record and a database object (e.g. a table or class) associated with the new record. Additional parameters may be incorporated as well. After the processor 312 has created a virtual particle, it copies the virtual particle into the circular buffer.

As is known in the art, a circular buffer is typically a contiguous range of memory in which data is inserted based on a pointer into the next available buffer location. When the pointer reaches the last buffer position in the range of memory, it resets to the first buffer position in the range of memory. Thus, the buffer essentially operates as a circle or ring, with the last memory location connected to the first memory location. After the first traversal through the entire buffer, as more data is added to the buffer, the oldest entry is overwritten with the newest entry, and so forth.

As additional database access events occur, additional virtual particles are created and inserted into the circular buffer. However, because the database server 310 is not responsible for displaying a virtual physical environment, the virtual particle information must be transferred to the display computer 210. Thus, the database server 310 transmits the virtual particle information to the display computer 210 across the network 330. In this example, the database server 310 also comprises a network adapter (not shown) that is in communication with the memory 314. The network adapter is configured to read data from the circular buffer and transmit it to the display computer 210 across the network 330. In this example, the network adapter is configured to read data from the circular buffer approximately every 1/6 of a second. Thus, any new entries into the circular buffer since the last transmission are read out of the circular buffer and transmitted by the network adapter to the display computer 210. The network adapter is further configured to access the circular buffer using DMA to increase the speed at which data may be read and transmitted to the display computer 210. As discussed above, in this example, each of the multiple processors or processor cores may be configured to access its own dedicated circular buffer, and the network adapter may be configured to read and transmit from each of the plurality of circular buffers every 1/6 of a second.

In some examples, very large numbers of virtual particles may be generated in a short period of time. Communicating each of these virtual particles may consume a significant amount of bandwidth and thus, it may be desirable to generate only a single virtual particle that is representative of a group or virtual particles and then provide a count or indication of a quantity of virtual particles to be generated. For example, in a database search, a very large number of records may be accessed; however only a few records may satisfy the search criteria. Thus, for each 100 records searched, a single virtual particle may be generated with representative characteristic (e.g. a speed and a direction) and a quantity (e.g. 100). When the circular buffer is read, each buffer entry then represents up to 100 virtual particles (in this example) that may be displayed simultaneously, or in succession, based on the quantity and other parameters, such as whether to display the virtual particles simultaneously or in succession (as well as a time interval). In one such a system, if 10,000 records are accessed in a search, with 4 records satisfying the search criteria, 100 representative virtual particles (all but 1 representing 100 virtual particles, with the last representing 96 virtual particles) may be generated for each of the evaluated records, and 4 individual virtual particles (each representing one of the "found" records). Such an example would reduce the buffer entries from 10,000 to 104.

In the example shown in Figure 3, the network adapter comprises a 10Gbps Ethernet adapter. Such an adapter may be desirable to provide adequate bandwidth to allow high volumes of virtual particles between the database server 310 and the display computer 210. However, in less demanding environments, other network adapters may be used. For example, 10Mbps, 100Mbps, or 1Gbps Ethernet adapters may be used in some examples. Other examples may employ other types of network adapters, including fiber optic, wireless, or other wired connections.

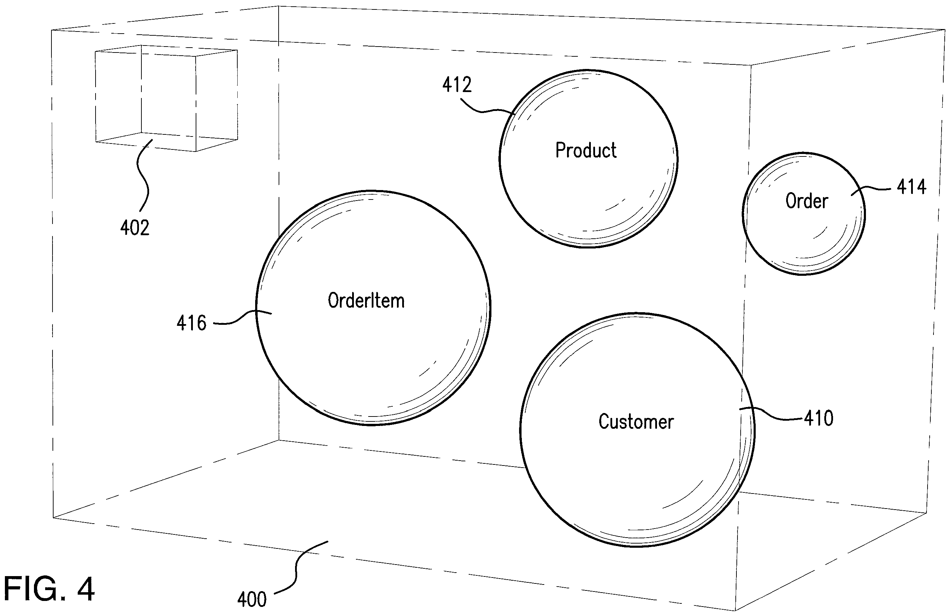

Referring now to Figures 4-12, which show a virtual physical environment according to one example of the present invention, the following description provides examples of a virtual physical environment displaying database usage. In the example shown, the virtual physical environment represents an object database having four database classes: a customer class, a product class, an order class, and an orderitem class.

Figure 4 shows a virtual physical environment 400 according to one example of the present invention. In the example shown, the virtual physical environment 400 comprises three spatial dimensions, which are partially represented by the hashed bounding box. In the example shown, the virtual physical environment 400 has defined boundaries, though in some examples, a virtual physical environment 400 may extend indefinitely in one or more spatial dimensions.

Within the virtual physical environment 400 are four virtual physical objects, spheres 410-416, each representing one of the four database classes. At the time shown in Figure 4, no virtual particles are visible in the system; however, the relative "masses" of the spheres 410-416, which may be indicated by a size or color of the sphere, indicates the number of database records associated with the corresponding database table or class. Thus, the spheres "contain" the virtual particles corresponding to the records in the database. Also shown in Figure 4 is a small region 402 of the virtual physical environment 400 that is the origination point of new virtual particles to the system, typically representing newly added database records. This starting region 402 is not a visible object within the environment 400, but is shown to aid in understanding these figures, though in some examples it may be visible.

While the example shown in Figure 4 uses simulated gravity to model a virtual physical system, other virtual physical systems may use other types of effects, such as simulated electromagnetism or simulated indentations on a substantially planar surface to model a virtual physical system. Further, while in the example shown in Figure 4, the virtual physical objects have "masses" (for gravitational simulation) relative to the number of records in a corresponding database table or class, in other examples, the virtual physical objects may have other properties that vary in proportion to the number of records, such as size, color, shape, electromagnetic charge, etc. In further examples, the virtual physical objects may not vary at all and may be of fixed size, mass, etc. Further, to allow a user to more easily differentiate between different virtual physical objects, each virtual physical object may have different characteristics, such as color, shape, gravitational properties, electromagnetic properties, etc.

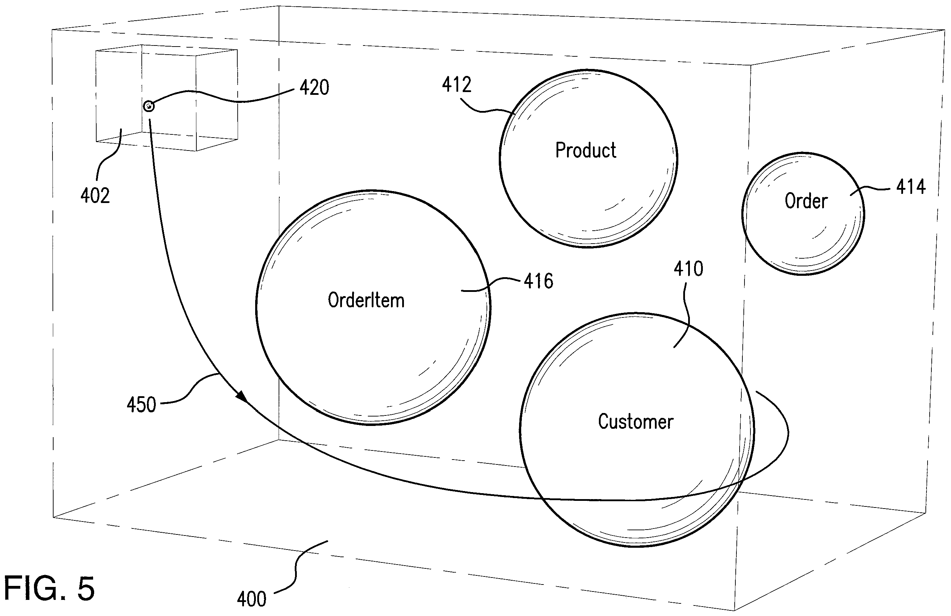

Figure 5 shows a new virtual particle being introduced into the environment 400. Typically, a new virtual particle 420 may be added to the system in response to a 'create' event, which creates a new instance of a class or record. In the example shown in Figure 5, the newly-created instance is a new customer, and so the new virtual particle 420 is created in the virtual physical environment with an initial position, within the starting region 402 because the virtual particle is new, and an initial velocity. After the 'create' event instantiates the object, the new instance may be inserted into the database, so an 'insert' event, which adds a new record to the database, occurs and the virtual particle becomes associated with a virtual physical object. Thus, because the virtual physical environment simulates a gravitational attraction between virtual particles and their corresponding sphere, the new virtual particle 420 is drawn towards the customer sphere 410, such as along path 450. Note that while in this example, separate create and insert events are used, in other examples, a create event may be interpreted to be the same as an insert event, or the reverse may be true, such that when a new database record is created, it is necessarily inserted at the same time. Some such examples may be useful for objects that are instantiated, but not added to the database as a part of the instantiation, but only at some later time.

In some examples, an object within an application may correspond to multiple records within a database, such as an object that represents a Join operation between two or more tables in a relational database. In one such an example, saving an application object within a database may generate a plurality of virtual particles, each associated with a respective virtual physical object representing a different table in the database. In some examples, a new virtual physical object may be created to represent a view in the database made from multiple database tables. In such an example when the view is accessed, a virtual particle may erupt from the view, or virtual particles from the tables corresponding to the view may each erupt a virtual particle, which then travels to the view object at which time they combine into a single virtual particle orbiting the view. Conversely, in an example that allows inserts into a view, or view-type composite object, a new virtual particle may originate in region 402, move to the view object, at which time the virtual particle is absorbed into the view object, and new virtual particles, corresponding to the base tables are ejected from the view object and travel to their respective virtual physical objects, where they orbit and are absorbed. Thus, a database operator may be able to distinguish database operations on an individual table or when accesses are made through another avenue, such as a view. In some examples, different types of database objects may be represented by virtual physical objects having different visual or physical characteristics. For example, in one example, database tables are represented by spheres, while views are represented by cubes. Further examples may associate virtual physical objects with particular database users or classes of users, e.g. users with access to particular views or tables.

Some examples of the present invention update the virtual physical environment many times per second, which produces a 4-dimensional scene - one having three spatial dimensions and a temporal dimension. As such, a viewer of the virtual physical environment 400 can watch the evolution of the environment 400 in real-time or near real-time. Thus, the user could see the new virtual particle 420 appear and then move towards the customer sphere 410. This would indicate the user that a new customer record had been added to the database. Note that in other examples, a virtual physical environment may only comprise one or two spatial dimensions, or may be presented in a simulated 3-dimensional view, such as with stereoscopic images.

In addition, because each scene, after being generated and rendered, is simply a two-dimensional image, the images could be stored as a movie, such as for logging purposes. Alternatively, or in addition, the creation of virtual particles and movement could be logged, which could allow a virtual physical environment to represent database activity that occurred in the past. For example, a period of database activity could be stored in a log and sent to a remote location to be loaded into a visualization application to allow the database log to be viewed graphically.

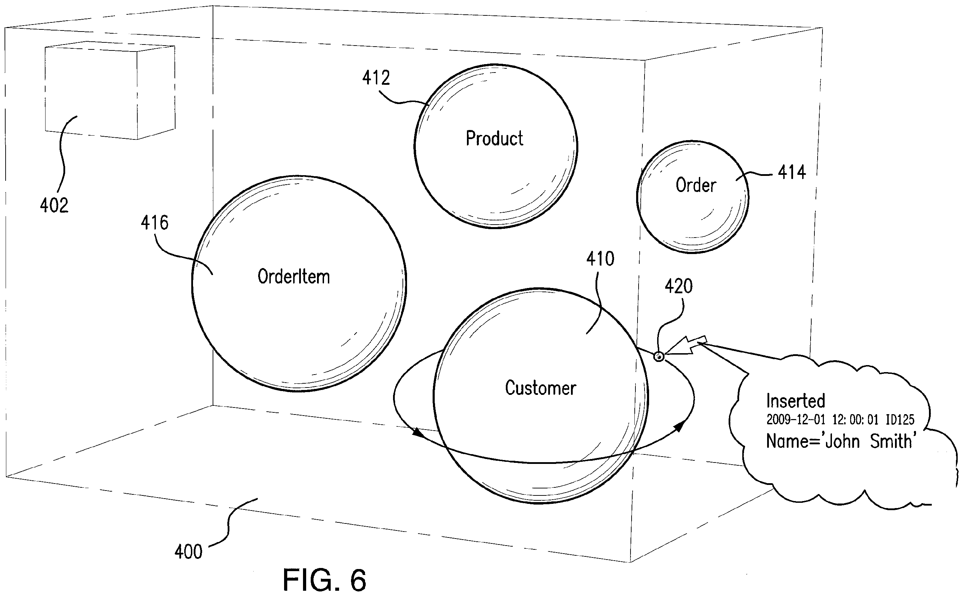

Figure 6 shows the virtual physical environment 400 after the new customer virtual particle 420 has reached the customer sphere 410. In some examples of the present invention, a virtual particle may immediately be absorbed by a sphere once the virtual particle has arrived at the sphere. However, in the example shown, the virtual particle 420 orbits the customer sphere for a period of time, such as a few seconds, or until a user-triggered event before being absorbed. For example, a user may press a "reset" button that causes all virtual particles to be absorbed into their respective virtual physical object. While a virtual particle is visible, a user may select the virtual particle, such as with a mouse cursor, to obtain information about the virtual particle. As may be seen in Figure 6, the virtual particle 420 represents a customer record for John Smith.

As will be discussed in more detail below, virtual particles may be added to the virtual physical environment based on virtual particles generated by a DBMS or other database application. In some examples, virtual particles may be generated as 'identified virtual particles' or 'unidentified virtual particles.' An identified virtual particle may contain some information about the associated database record, such as a primary key value, while an unidentified virtual particle may simply represent one or more generic virtual particles of a particular database object. When a user selects a particular virtual particle, such as is shown in Figure 6, a request for the database record may be sent to the database to be displayed for the user. If the virtual particle is an identified virtual particle, the database request may simply be for the database record having the associated primary key value. However, for an unidentified virtual particle, representing one of many unidentified database records, no particular database record may be associated with a displayed virtual particle, and so a representative database record, such as from a series of newly-added records, may be returned and displayed.

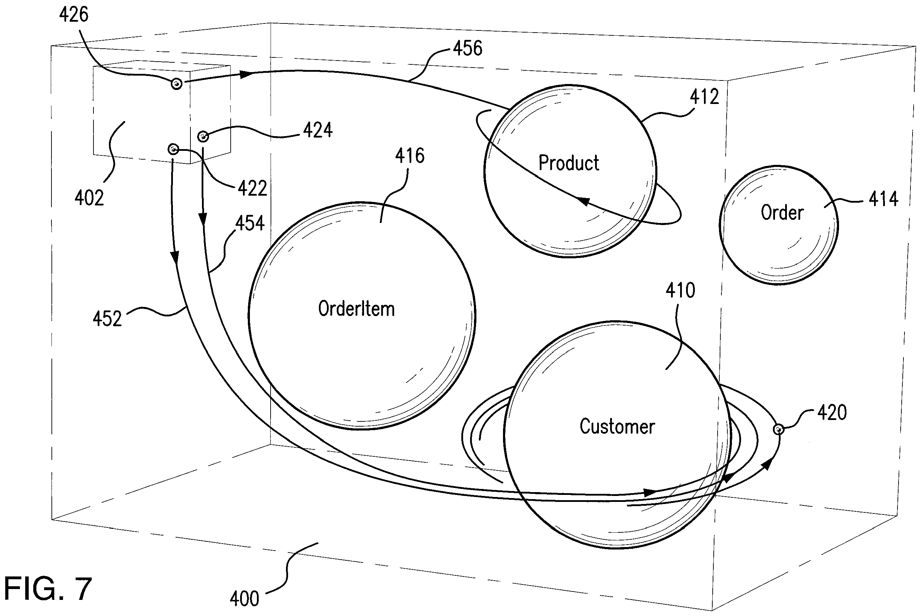

In Figure 7, several new database records have been added to the database, represented by virtual particles 422-426. Two of the new database records are new customer records, while one is a new product record, as is indicated by the travel paths 452, 454 for new virtual particles 422, 424 towards the Customer sphere, and the travel path 456 for new virtual particle 426. Like virtual particle 420, the new virtual particles 422-426 orbit their respective spheres 410, 412 once they arrive.

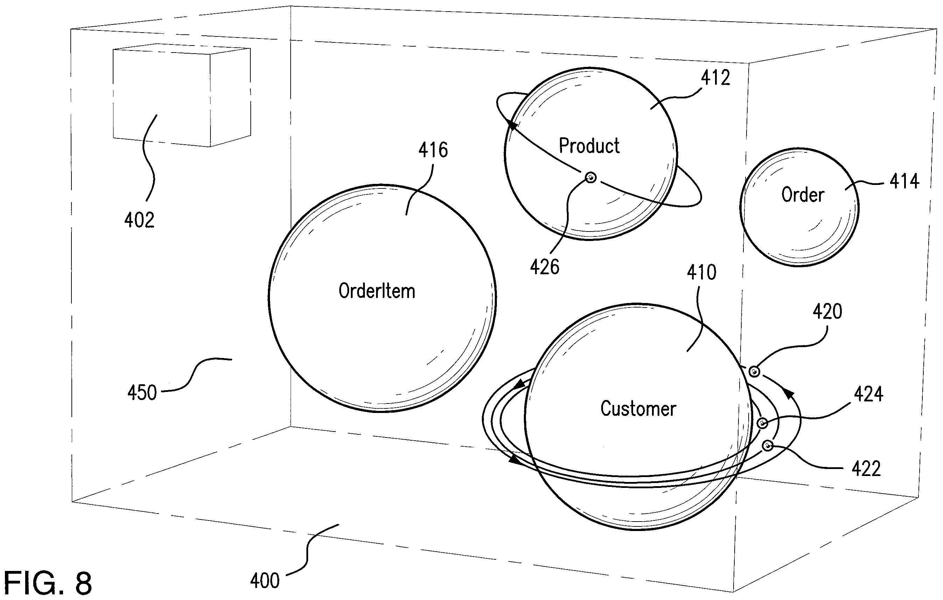

In Figure 8, the new virtual particles 422-426 have reached their spheres 410 and 412 and are now in orbit. As described above, each virtual particle may be selected by a user to determine the contents of the corresponding database record.

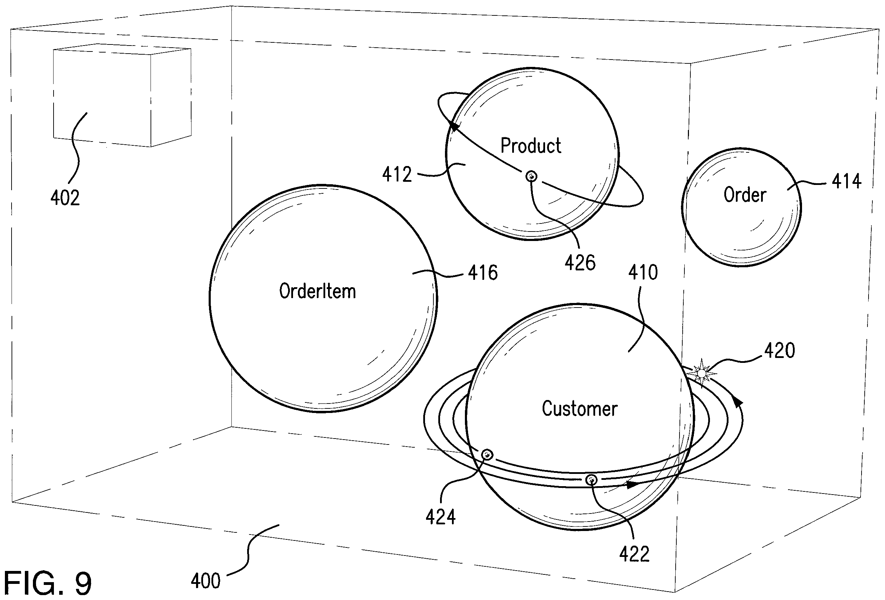

Figure 9 shows the virtual physical environment 400 displaying a database access of a database record. In the example shown in Figure 9, a user has accessed the database record corresponding to virtual particle 420, such as to update the database record or to retrieve the database record. Because the virtual particle 420 was already visible in the environment, the virtual particle 420 is illuminated, or brightened, to highlight it to a user. In some examples, other indications may be used, such as color changes or sounds.

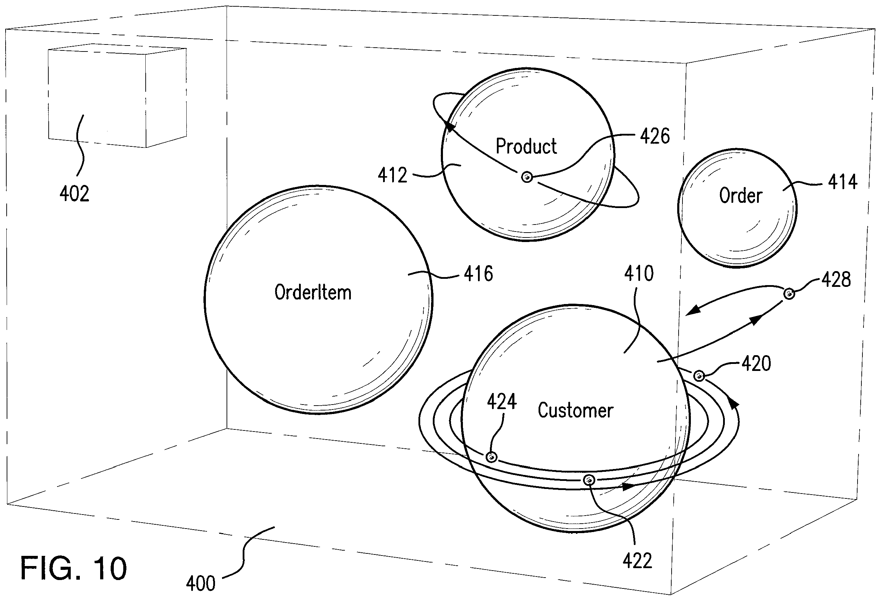

In Figure 10, an existing database record, which was not already represented by a visible virtual particle, has been accessed. Because a virtual particle 428 was not visible, one is created and displayed. However, because the database record already existed in the database, the virtual particle 428 is shown as being ejected or erupting from the Customer sphere 410. The virtual particle 428 travels away from the sphere 410 until it is recaptured into orbit by the sphere's simulated gravitational force.

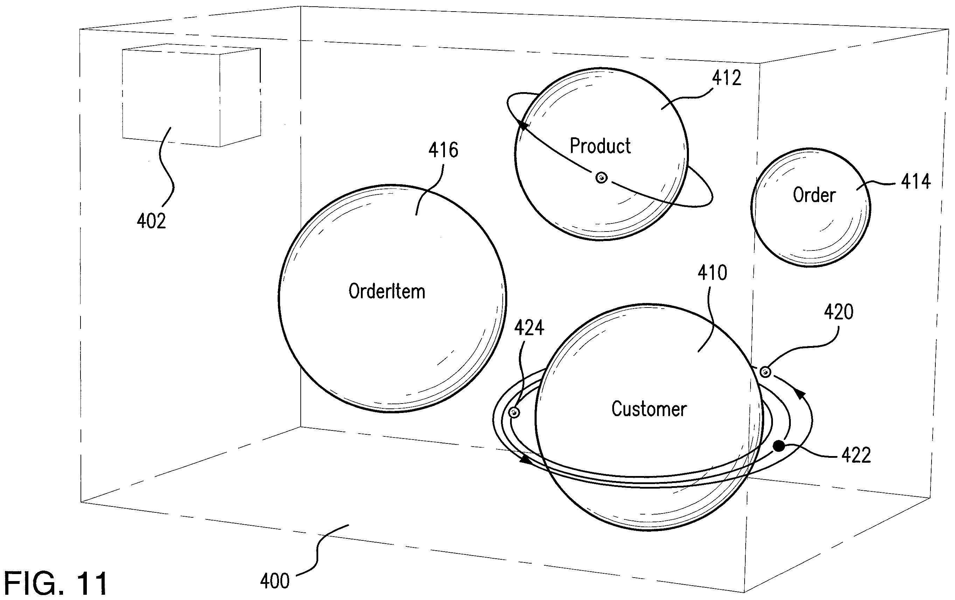

Figure 11 shows a visualization of a database record being deleted. In Figure 11, the database record corresponding to virtual particle 422 is deleted and the corresponding virtual particle changes appearance to that of a "black hole" and disappears shortly thereafter. Had virtual particle 422 not already been visible, it would have been "ejected" from the Customer sphere 410 before changing appearance and disappearing.

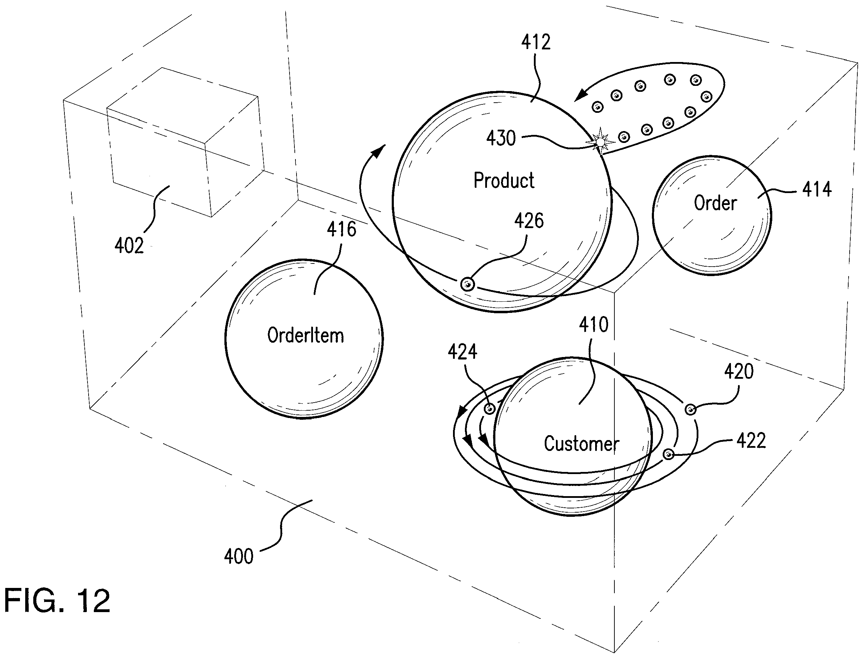

In Figure 12, a database search is being performed and, consequently a large number of database records are accessed. These accesses are represented as discussed above by virtual particles being "ejected" from their respective sphere 412 before returning to orbit the sphere and then be reabsorbed. In addition, because some of the database records may match search parameters or may be accessed by a user, such a virtual particle 430 is shown as illuminated. Such a visual effect may immediately indicate to a user that a database search of products has been executed. In addition, because database activity is occurring at a sphere that is not closest to the user's previous viewing angle, the view into the virtual physical environment 400 has shifted to provide a better view of the new database activity. Such a shift may be performed automatically or manually in some examples.

In some examples, multiple queries may be performed simultaneously on a database object. In one such examples, the multiple queries may be represented within the virtual physical environment by a plurality of sets of virtual particles erupting from a virtual physical object (or multiple virtual physical objects). For example, each query may be assigned a different initial velocity for all records affected by the query such that the different queries erupt virtual particles to different heights from a virtual physical object. Or, each query may display accessed records in a different color such that the different queries may be easily distinguished.

As discussed previously, the accesses shown in Figure 12 may be implemented using representational virtual particles, each representing a generic virtual particle with particular properties that is then reproduced a number of times based on one or more parameters (e.g. a count, an interval, a color, etc.) or multiple virtual particles may be interpolated based on the generic virtual particle's movements, thus potentially reducing communications bandwidth needed to transmit the virtual particles between computers. Further, the representational virtual particles may be displayed in a way to indicate unnecessary database accesses, such as by showing in a different color or possessing different characteristics, e.g. a lower velocity so the virtual particle does not travel a significant distance from its respective virtual physical object, while a "found" virtual particle may have a greater velocity and thus may stands out to an observer.

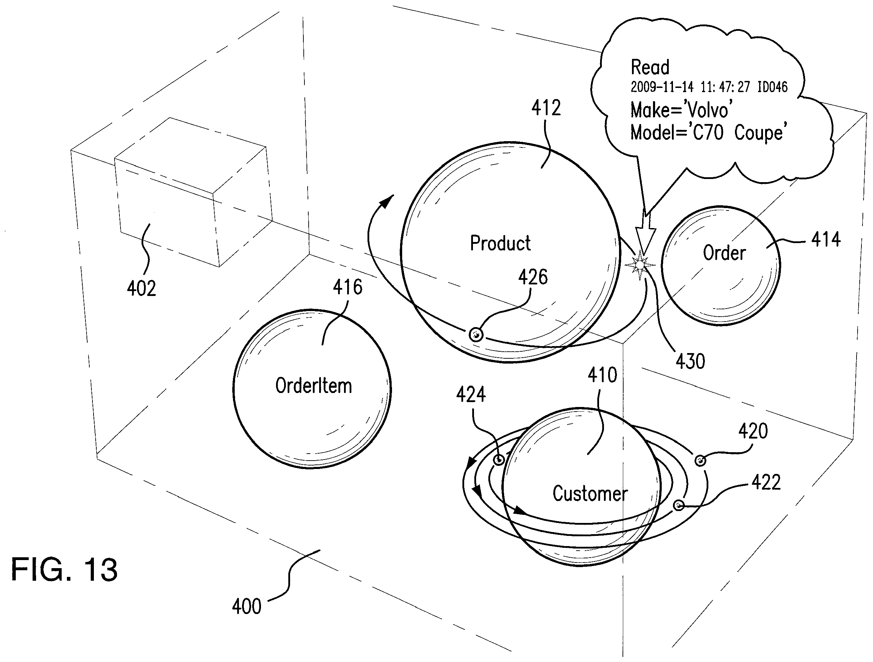

Figure 13 shows the illuminated virtual particle 430 found during the database search shown in Figure 12 within the virtual physical environment. The illuminated virtual particle 430 orbits the product sphere and has been selected by the user to view the contents of the corresponding database record.

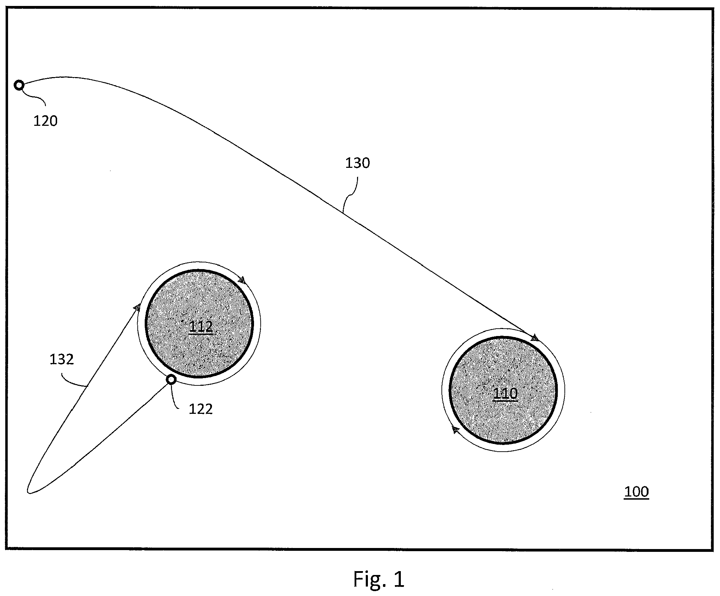

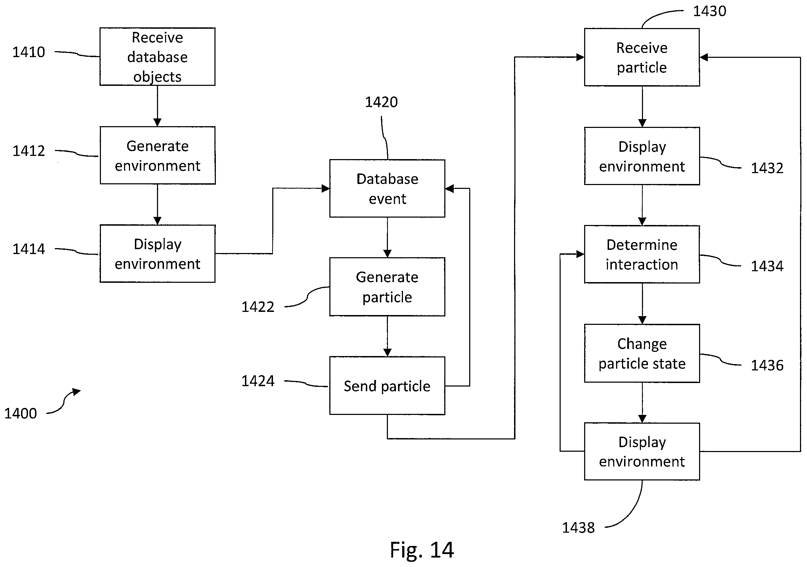

Referring now to Figure 14, Figure 14 shows a method 1400 for database usage visualization according to one example of the present invention. The method shown in Figure 14 will be discussed with respect to the system 300 shown in Figure 3. However, such a method could be executed by the system 200 shown in Figure 2 or by systems according to other examples of the present invention and may be capable of generating the virtual physical environments shown in Figures 1 and 4-13 or variations thereof discussed with respect to those figures. Further, means for performing such a method may include processors in communication with computer-readable media, such as those shown in Figures 2 and 3, executing the methods disclosed below with respect to Figure 14. As is discussed in more detail, means for performing methods according to the present invention may include means for performing some or all of the method steps below, or additional method steps described throughout this specification, such as those described with respect to figures 4-13.

In the example shown in Figure 14, the method 1400 begins at block 1410; however, in some examples, methods may begin at other blocks, such as block 1420 or 1430 according to different examples, or may comprises fewer than all blocks, or other blocks not shown in Figure 14..

At block 1410, the processor 212 of the display computer 210 receives information describing one or more database objects. For example, in one example, the display computer 210 receives the information from the database server 310, while in some examples it may be received from a data file or from a user. As discussed above, database objects represent objects defining the database. For example, in one example using a relational database, a database object may represent a table or a view. In another example using an object-oriented database, a database object may represent a class. The information describing the one or more database objects may comprise a name of each database object. In one example, the information describing the one or more database objects may comprise additional information, such as the number of records corresponding to the database object (e.g. the number of rows in a table or the number of instantiations of the database class).

In some examples, the processor 212 may receive information describing less than all of the database objects. For example, in one example, a database administrator may be interested in viewing usage associated with some of the database objects. In such an example, a user may select one or more database objects from a plurality of available database objects. After the processor 212 receives the database objects, the method proceeds to block 1412.

At block 1412, the processor 212 generates a virtual physical environment. In one example, the virtual physical environment comprises two spatial dimensions, such as the example shown in Figure 1. However, in some other examples, the virtual physical environment comprises three spatial dimensions, such as the example shown in Figures 4-13. A virtual physical environment having three spatial dimensions may comprise a space defined by three axes, such as X, Y, and Z axes. In one example, a virtual physical environment may be configured to extend indefinitely in one or more dimensions, where a boundary of the virtual physical space may be defined based on the most distant objects located in each of the spatial dimensions. In another example, a virtual physical environment may comprise one or more fixed boundaries in one or more of the spatial dimensions.

After defining the spatial characteristics of the virtual physical environment, the processor 212 may add one or more virtual physical objects to the virtual physical environment. For example, the processor 212 may create one virtual physical object for each of the database objects received at block 1410. In one example, the processor may create virtual physical objects to represent fewer than the number of database objects received at block 1410. Virtual physical objects may have different physical appearances according to various examples of the present invention. For example, in one example, virtual physical objects may be two-dimensional, such as shown in Figure 1. In some examples, virtual physical objects may be three-dimensional. The dimensions of a virtual physical object may not necessarily correspond to the number of dimensions describing the virtual physical environment. For example, in one example, a virtual physical environment may comprise three physical dimensions, while one or more virtual physical objects may be two-dimensional. Further, in some examples, virtual physical objects may have different shapes or geometries. For example, in one example, virtual physical objects may be substantially sphere shaped. In such an example, because a GPU defines graphical objects using triangular polygons, the sphere is substantially sphere shaped because it is composed of a plurality of triangular polygons. In other examples, other shapes may be employed such as rectangular polygons or solids. Further, in some examples, virtual physical objects may change shape over time.

Examples of the present invention include virtual physical environments having virtual particles representing database records. However, in one example, a virtual physical environment does not initially comprise any virtual particles. Though in some examples, a virtual physical environment may be created having one or more virtual particles. After the virtual physical environment has been generated, the method moves to block 1414.

In block 1414, the display computer 210 displays the virtual physical environment. In one example, information describing the virtual physical environment is sent to the GPU 216 to be processed for display. In some examples, information about one or more virtual physical objects, or one or more virtual particles are set to the GPU 216 to be processed for display. In such examples, the GPU is configured to generate a display signal and to transmit the display signal to the display 230.

In the example shown in Figure 14, blocks 1410-1414 are ordered to occur before blocks 1420-1438; however, there is no requirement that the virtual physical environment be created and displayed before database events may occur. In some examples, system and methods for database usage visualization may be executed while a database (or databases) are already active and receiving database requests. Such examples may be configured to connect to an operating DBMS. Further, in some examples, a virtual physical environment may already be operating and a display computer 210 may connect to such a virtual physical environment. In such examples, systems and methods for database usage visualization may not need to execute blocks 1410-1414, as they have already been performed, and may proceed immediately to block 1420 or 1430.

In block 1420, a database event is received by the processor 312 in the database server 310. For example, the processor 312 may receive a database access request may be received, such as one of a create, read, update, or delete event. Other events such as errors, transaction reversals, etc. may also occur. After a database event occurs, the method proceeds to step 1422.

In block 1422, the processor 312 generates a virtual particle. In one example, the processor 312 may be configured to generate two different types of virtual particles, identified virtual particles and unidentified virtual particles. In such an example, an identified virtual particle corresponds to a particular, identifiable record in the database, while an unidentified virtual particle corresponds to a set of database records.

An identified virtual particle may comprise parameters associated with the database record. For example, in one example, an identified virtual particle may comprise an object number, a virtual particle type, a virtual particle position, a source object, and a target object. An object number uniquely identifies the virtual particle and may be the primary key value of the corresponding database record.

Virtual particle position indicates whether the virtual particle is associated with a new database operation, such as a new database search. In some examples, a single database event may result in the creation of multiple virtual particles. In one such example, the virtual particle position is a binary flag that indicates whether the virtual particle is the first virtual particle generated by the database event or not. In some examples, the virtual particle position may indicate a number indicating the order in which the record was returned as a result of the operation. Such information may be used to determine physical properties of a virtual particle in the virtual physical environment as will be described later.

The virtual particle type indicates the type of virtual particle to be displayed and may correspond to the type of database access event. For example, in one example, the virtual particle type may be as described in the following table:

### Virtual particle Type Description

| | |
|---|---|
| Inserted | A record has been inserted. |
| Updated | A record has been updated. |
| Deleted | A record has been deleted. |
| Evaluated | When a query is issued that results in an evaluation of multiple database records, when a record is checked for a filter, the record is evaluated. |
| Found | A record that is returned from a database read request. |
| Not Found | A record was not found in the database |

The source object parameter indicates the object from which the database record was retrieved. If the database event resulted in a new record being created, this field may be set to a value indicating that it was newly created.

The target object parameter indicates the object for which the virtual particle is destined. For most database events, the source object parameter and the target object parameter will be the same. For example, when a record is retrieved from a database object, the source object and the target object parameters will be the same. However, in some cases, such as a create event or a delete event, the source object and the target object parameters may have different values. For example, for a delete event, the target object parameter may be set to a value indicating the record is being deleted. The source object and target object parameters may be used to determine physical properties of a virtual particle in the virtual physical environment as will be described later.

In one example, an unidentified virtual particle comprises parameters similar to an identified virtual particle. However, because an unidentified virtual particle corresponds to a set of records, in one example, it may comprise fewer parameters than an identified virtual particle. For example, in one example an unidentified virtual particles comprises a virtual particle type parameter, a virtual particle position parameter, a virtual particle count parameter, a source object parameter and a target object parameter. In such an example, an unidentified virtual particle does not comprise an object number parameter. This is because the unidentified virtual particle corresponds to a plurality of database records. However, in some examples, an unidentified virtual particle may comprise a plurality of object number parameters.

In one example, the virtual particle type, virtual particle position, source object, and target object parameters have the same information as described above with respect to the identified virtual particle parameters. In such an example, the virtual particle count parameter describes the number of records represented by the unidentified virtual particle. Thus, if the unidentified virtual particle corresponds to 50 database records, the virtual particle count would have the value 50.

In examples of the present invention that employ multiple types of virtual particles, the type of virtual particle created may be determined based on the database event. For example, for events that affect only one or a small number of database records, identified virtual particles may be generated for each affected database record. However, in some cases, a database event may affect a large number of database records, such as a search of database records. In such a case, it may be advantageous to generate an unidentified virtual particle corresponding to a plurality of affected database records. This may reduce the number of virtual particles generated by the database server 310 and may reduce overhead processing by the processor 312.

After a virtual particle has been generated, the method 1400 proceeds to block 1424.

In block 1424, a virtual particle is sent to be processed and displayed. In the example shown in Figure 14, the virtual particle is stored in a circular buffer as described above with respect to Figure 3. A network adapter (not shown) of the database server 310 periodically reads new virtual particles in the circular buffer using to DMA and transmits them to the display computer 210 across the network 330. However, in some examples, the database server 310 may transmit virtual particles as they are created without first storing them in a circular buffer.

In examples employing a circular buffer, if sufficient virtual particles are created rapidly enough, it may be possible to overwhelm the circular buffer. In other words, virtual particles may be inserted faster than they can be read back out. To detect such events, some examples of the present invention include an additional data field for each virtual particle inserted into the circular buffer. The additional data field is referred to as a 'revolution flag' in one example. Initially, the revolution flag for every virtual particle inserted into the circular buffer is set to 0. Once the circular buffer has filled, as new virtual particles are added, the revolution flag is set to 1. Once the circular buffer has been filled again, the revolution flag is set back to 0, and so forth. Thus, by counting the number of consecutive virtual particles transmitted with the revolution flag set to either 0 or 1, and by knowing the size of the circular buffer, it is possible to determine if entries are overwritten before being transmitted. For example, if a circular buffer comprises 10 positions, it would be expected to transmit 10 virtual particles having their revolution flag set to 0 before reading any virtual particles with a revolution flag set to 1. However, if only 8 virtual particles with their revolution flag set to 0 are sent before a virtual particle with a revolution flag set to 1 is read, 2 virtual particles were overwritten before they were transmitted. Thus, overflow conditions may be detected and announced to an administrator.

In another example, the database server 310 may be configured with two virtual particle buffers per processor 312. In such an example, a processor 312 may be configured to store new virtual particles in the first virtual particle buffer. When the first virtual particle buffer has been filled, the processor 312 may then store new virtual particles in the second virtual particle buffer. When the second virtual particle buffer has been filled, the processor 312 may start refilling the first virtual particle buffer. To transmit virtual particles to the display computer 210, a network adapter (not shown) in the database server 310 may be configured to transmit new virtual particles periodically.

For example, a counter may be configured such that when the counter reaches a predetermined value, the network adapter may be signaled to transmit new virtual particles, such as by an interrupt. The network adapter may be further configured to transmit when a virtual particle buffer has been filled and to then reset the counter. For example, if a small number of virtual particles are being created each second, it may take an extended period of time to fill a virtual particle buffer. Because the display computer 210 updates the virtual physical environment in real time (or near real time), it may not be desirable to wait until a virtual particle buffer is filled before transmitting. Thus a periodic transfer may be triggered by a counter or timer. However, if a large number of virtual particles are being generated per second, it may be best to transfer virtual particles more often than the counter interval. In such an example, when a virtual particle buffer is filled, the counter may be reset and an interrupt may be generated to cause the network adapter to transmit new virtual particles from the virtual particle buffer.

After sending the virtual particle to the display computer 210, the method 1400 proceeds to block 1430.

At block 1430, the display computer 210 receives a virtual particle from the database server 310. In the example shown in Figure 14, the display computer 210 receives the virtual particle via a network adapter (not shown), which inserts the virtual particle in a circular buffer in memory 214 using DMA. The display computer 210 polls the DMA area in memory 214 periodically and retrieves new virtual particles from the circular buffer. In some examples, the display computer 210 may receive the virtual particles in other ways. For example, in one example, such as the example shown in Figure 2, the display computer 210 may be executing a DBMS application and a monitoring application that supplies virtual particle information. In such an example the display computer 210 receives the new virtual particles from the monitoring application. After receiving a virtual particle, the method 1400 proceeds to block 1432.

At block 1432, the display computer 210 generates a display signal configured to cause the display device 230 to display the virtual particle within the virtual physical environment from a perspective point. As described above, the display computer 210 is configured to use the GPU 216 to generate display signals based on the virtual physical environment, virtual physical objects and virtual particles, and to transmit the display signals to the display device 230. In one example, the GPU 216 receives a virtual particle and generates a virtual particle within the virtual physical environment. In addition, the virtual particle comprises one or more parameters describing a state of the virtual particle. For example, in one example, a virtual particle in the virtual physical environment comprises a mass and coordinates describing a location within the virtual physical environment, such as (X, Y, Z) coordinates in one example comprising a three-dimensional virtual physical environment. In some examples, all virtual particles within a virtual physical environment may comprise the same mass value, though some examples may have virtual particles with varying masses. Further, some examples may comprise virtual particles having electrical charges not masses.

In addition, the virtual particle may comprise a velocity parameter, or a plurality of parameters describing a velocity (e.g. speed and a direction). A virtual particle may further comprise other display parameters, such as a color or an intensity.

In some examples, a virtual particle within the virtual physical environment may comprise additional parameters. For example, as described above, in some examples, virtual particles may be identified virtual particles or unidentified virtual particles. In one such example, a virtual particle in the virtual physical environment may comprise information related to the database record, such as the values of data fields within the database record. If a virtual particle in the virtual physical environment comprises an unidentified virtual particle, the virtual particle may not comprise information related to the database record, but may comprise parameters configured to store such information. In some examples, unidentified virtual particles may be converted to identified virtual particles based on user interactions, as described above with respect to Figures 4-13. In one example, identified virtual particles may not be visually distinguishable from unidentified virtual particles, though in some examples, unidentified virtual particles may have a different appearance. Having a different appearance for unidentified virtual particles may be advantageous because it may indicate to a user that a database access may be required to access a database record associated with the virtual particle.

Virtual particles may be generated within the virtual physical space based on the various parameters associated with the virtual particle, such as location, velocity, etc. Further, the values of such parameters may be based upon virtual particle information received from the database server. For example, if a virtual particle is inserted, and consequently does not have a source object value, the virtual particle may be assigned an initial location within a region of the virtual physical environment associated with newly-inserted virtual particles. The virtual particle may further be assigned a random initial velocity.

After the virtual particle has be generated within the virtual physical environment, the GPU generates a display signal based on a perspective point into the virtual physical environment. In one example of the present invention, the virtual physical environment may comprise a three-dimensional environment. In such an example, the virtual physical environment may be viewed from a plurality of angles and locations. Thus, a perspective point, or camera location, must be selected. In one example of the present invention, a user may select a desired perspective point. In another example, a perspective point may be selected based on the location of a virtual physical object associated with a large number of recent database events. After the perspective point has been selected, the GPU 216 generates a display signal configured to cause the display device to display the virtual particle within the virtual physical environment from the perspective point. The GPU 216 then transmits the display signal to the display device 230 to cause the display device 230 to display the virtual physical environment from the perspective point. The method 1400 then proceeds to block 1434.

At block 1434, the display computer 210 determines an interaction between the virtual particle and an object corresponding to a database object of a database within the virtual physical environment. For example, in one example, a virtual physical environment comprises a virtual particle corresponding to a database record in a first table and a virtual physical object corresponding to the first table. Further, in such an example, each of the virtual particle and the virtual physical object comprise a mass such that the virtual physical object exerts a gravitational force on the virtual particle. As such, the display computer 210 determines an interaction between the virtual particle and the virtual physical object based at least in part on the gravitational attraction. In a similar example, a virtual physical environment also comprises a second virtual physical object corresponding to a second database table. However, because the virtual particle is not associated with the second virtual physical object, such as based on the target object parameter, the display computer 210 determines that no interaction occurs between the virtual particle and the second virtual physical object. After determining an interaction between the virtual particle and an object in the virtual physical environment the method 1400 proceeds to block 1436.

At block 1436, the display computer 210 changes the state of the virtual particle based at least in part on the interaction. For example, in one example, the display computer 210 determines a new position for the virtual particle based upon its previous velocity and the elapsed time since the last time the display was updated. The display computer 210 may also determine a new velocity for the virtual particle based upon the interaction. For example, the velocity of the virtual particle may increase based on the interaction, such as based on a gravitation attraction. In another example, the velocity may increase based on an electromagnetic attraction between the virtual particle and the virtual physical object.

In addition to changing location or velocity, the virtual particle's appearance may change. For example, in one example, the virtual particle's brightness may be increased based on the virtual particle representing a database record that was successfully located during a database search. In one example, the virtual particle's appearance may be darkened to indicate that the database record associated with the virtual particle is being deleted from the database. In some examples, as described above, virtual particles accessed during a search, but not satisfying a search query, may be displayed with a different color or may have different simulated physical characteristics such that they are differentiable from virtual particles that satisfy the search query.

After the virtual particle's state has been changed, the display computer 210 generates a second display signal configured to cause the display device to display the virtual particle within the virtual physical environment from the perspective point based on the changed state of the virtual particle. For example, the GPU 216 may generate a new display signal based on the new state information of the virtual particle within the virtual physical environment. Thus, the virtual physical environment is updated based on the new state information of the virtual particle and a new display signal is generated and transmitted to the display device 230 to display the updated virtual physical environment. After the virtual physical environment is displayed again, the method 1400 may complete, or it may return to blocks 1430 or 1434 to continue to update the virtual physical environment based upon interactions between virtual particles and virtual physical objects or to add or remove virtual particles from the virtual physical environment. Further, if the display of the virtual physical environment occurs at a sufficient rate, the display may provide a user with a realistic simulated physical system showing a real time or near-real time visualization of database usage.

Examples of the present invention can be implemented in digital electronic circuitry, or in computer hardware, firmware, software, or in combinations of these technologies. In one example, a computer may comprise a processor or processors. The processor comprises a computer-readable medium, such as a random access memory (RAM) coupled with the processor. The processor executes computer-executable program instructions stored in memory, such as executing one or more computer programs for messaging. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise or be in communication with media, for example computer-readable media, which stores instructions that, when executed by the processor, cause the processor to perform the steps described herein as carried out or facilitated by a processor. Examples of computer-readable media may comprise, but are not limited to, an electronic, optical, magnetic, or other storage or transmission device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. Also, various other devices may include computer-readable media, such as a router, private or public network, or other transmission device. The processor and the processing described may be in one or more structures and may be dispersed through one or more structures. The processor may comprise a code for carrying out one or more of the methods (or parts of methods) described herein.

### General

Reference herein to "one example" or "an example" means that a particular feature, structure, operation, or other characteristic described in connection with the example may be included in at least one implementation of the invention. The invention is not restricted to the particular examples described as such. The appearance of the phrase "in one example" or "in an example" in various places in the specification does not necessarily refer to the same example. Any particular feature, structure, operation, or other characteristic described in this specification in relation to "one example" may be combined with other features, structures, operations, or other characteristics described in respect of any other example.

## Claims

1. A database usage visualization method to be performed by a computer (210) being in a local or remote communication to a database, said method comprising:
i) determining the type of a database access event and determining a database record affected by the access event;
ii) generating a first display signal configured to cause a display device (230) coupled to a graphical processing unit (216) of said computer to display a virtual physical environment (100, 400) simulating a physical system and comprising a virtual physical object (110, 112, 410-416) corresponding to a database object comprising or which is to comprise the database record affected by the access event; and
iii) transmitting the first display signal to the display device (230);
**characterised in that** the method further comprises:
iv) configuring the first display signal to cause the display device (230) to display a plurality of virtual particles (120, 122, 420, 422, 424, 426, 428, 430) in the virtual physical environment (100, 400), each virtual particle (120, 122, 420, 422, 424, 426, 428, 430) corresponding to a said database record affected by a said access event;
v) determining a movement of each virtual particle (120, 122, 420, 422, 424, 426, 428, 430) relative to the virtual physical object (110, 112, 410-416) within the virtual physical environment (100, 400), based on rules of the virtual physical environment (100, 400) and the database access events types;
vi) generating a second display signal configured to cause the display device (230) to display an animation of the movement of the virtual particles (120, 122, 420, 422, 424, 426, 428, 430) within the virtual physical environment (100, 400); and
vii) transmitting the second display signal to the display device (230);
whereby errors, access patterns and bottlenecks are displayed to the user based on movement patterns of the virtual particles (120, 122, 420, 422, 424, 426, 428, 430) within the virtual physical environment (100, 400) and simultaneously database activity is shown at the level of individual transactions by the movements of individual particles (120, 122, 420, 422, 424, 426, 428, 430); and while a virtual particle is visible, the virtual particle (120, 122, 420, 422, 424, 426, 428, 430) is selectable by the user to obtain information about the virtual particle.

2. The method of claim 1 wherein the database (220) is a relational database and the virtual physical object (110, 112, 410-416) corresponds to a database table of the database.

3. The method of claim 1 or 2 wherein the database (220) is an object-oriented database and the virtual physical object (110,112, 410-416) corresponds to an object class of the database.

4. The method of any of claims 1 to 3 wherein the rules of the virtual physical environment (100, 400) simulate gravitational or thermodynamic or electromagnetic or electrostatic or quantum mechanical effects.

5. The method of claim 4, wherein the virtual particles (120,122, 420, 422, 424, 426, 428, 430) comprise at least one of a simulated mass parameter, a simulated electric charge parameter, a position, a velocity, an acceleration, or a duration; and/or wherein the virtual physical object (110,112, 410-416) comprises at least one of a simulated mass parameter, a simulated electromagnetic parameter, a simulated electrostatic charge parameter.

6. The method of claim 4, wherein:
i) the virtual physical environment (100, 400) is gravitational;
ii) the virtual physical object (110, 112, 410-416) has a simulated mass;
iii) the virtual particles (120, 122, 420, 422, 424, 426, 428, 430) have a simulated mass;
iv) the virtual physical object (110, 112, 410-416) is fixed at its location; and,
v) movement of the virtual particles (120, 122, 420, 422, 424, 426, 428, 430) is determined by a simulated gravitational force towards the virtual physical object (110, 112,410-416).

7. The method of any of claims 1 to 6, further comprising at least one of:
i) changing a color or brightness of the displayed virtual particles (120, 122, 420, 422, 424, 426, 428, 430),
ii) changing the shape of the displayed virtual particles (120, 122, 420, 422, 424, 426, 428, 430), or
iii) hiding the displayed virtual particles (120, 122, 420, 422, 424, 426, 428, 430).

8. The method of any of claims 1 to 7 further comprising receiving a signal and changing a perspective point of the displayed virtual physical environment (100, 400) based at least in part on the signal.

9. The method of any of claims 1 to 8, wherein the virtual physical environment (100, 400) comprises a plurality of:
virtual physical objects (110,112, 410-416), each of the plurality of virtual physical objects associated with a respective database object of the database (220);
and/different ones of the plurality of particles (120, 122, 420, 422, 424, 426, 428, 430) are associated with different ones of the virtual physical objects (110,112, 410-416).

10. The method of any of claims 1 to 9 further comprising receiving a selection of:
i) the at least one virtual physical object (110,112, 410-416); and/or,
ii) the virtual particle (120, 122, 420, 422, 424, 426, 428, 430) and generating a third display signal configured to cause a display of parameters associated with the selection and transmitting the third display signal to the display device (230).

11. The method of any preceding claim further comprising recording the animation of the virtual physical environment (100, 400).

12. The method of any preceding claim, wherein the access event type comprises:
i) an insert event, and wherein generating the animation is configured to cause the display (230) to show a said virtual particle (420, 422, 424, 426, 428, 430) appearing within a starting region (402) and moving toward the virtual physical object (410-416);
and/or
ii) a delete event, and wherein generating the animation is configured to cause the display to show a said particle erupting from the object and being deleted
and/or
iii) a read event and generating the animation is configured to cause the display to show a said virtual particle (420, 422, 424, 426, 428, 430) virtually erupting from the virtual physical object (410-416).

13. A computer system for visualizing database usage comprising:
i) a computer (210) having a processor (212), a memory (214) and a graphics processing unit (216);
ii) the computer being in communication with a database (220) and a display (230); wherein the computer is programmed with code to cause the processor to execute the database usage visualization method claimed in any of claims 1 to 13.

14. A computer-readable medium comprising instructions which, when executed by a computer, cause the computer to carry out the database usage visualization method claimed in any of claims 1 to 13.

## Patentansprüche

1. Visualisierungsverfahren für die Datenbanknutzung, das von einem Rechner (210) durchgeführt wird, der sich in einer lokalen oder Fernkommunikation mit einer Datenbank befindet, wobei das Verfahren umfasst:
i) Bestimmen der Art eines Datenbankzugriffsereignisses und Bestimmen eines von dem Zugriffsereignis betroffenen Datenbanksatzes;
ii) Erzeugen eines ersten Anzeigesignals, das konfiguriert ist, um eine mit einer grafischen Verarbeitungseinheit (216) des Rechners gekoppelte Anzeigevorrichtung (230) zu veranlassen, eine virtuelle physikalische Umgebung (100, 400) anzuzeigen, die ein physikalisches System simuliert und ein virtuelles physikalisches Objekt (110, 112, 410-416) umfasst, das einem Datenbankobjekt entspricht, das den von dem Zugriffsereignis betroffenen Datenbanksatz umfasst oder umfassen soll; und
iii) Übertragen des ersten Anzeigesignals an die Anzeigevorrichtung (230); **dadurch gekennzeichnet, dass** das Verfahren weiter umfasst:
iv) Konfigurieren des ersten Anzeigesignals, um die Anzeigevorrichtung (230) zu veranlassen, eine Vielzahl von virtuellen Partikeln (120, 122, 420, 422, 424, 426, 428, 430) in der virtuellen physikalischen Umgebung (100, 400) anzuzeigen, wobei jedes virtuelle Partikel (120, 122, 420, 422, 424, 426, 428, 430) einem Datenbanksatz entspricht, der von einem Zugriffsereignis betroffen ist;
v) Bestimmen einer Bewegung jedes virtuellen Partikels (120, 122, 420, 422, 424, 426, 428, 430) in Bezug auf das virtuelle physikalische Objekt (110, 112, 410-416) innerhalb der virtuellen physikalischen Umgebung (100, 400), basierend auf Regeln der virtuellen physikalischen Umgebung (100, 400) und den Arten von Daten bankzugriffsereignissen;
vi) Erzeugen eines zweiten Anzeigesignals, das konfiguriert ist, um die Anzeigevorrichtung (230) zu veranlassen, eine Animation der Bewegung der virtuellen Partikel (120, 122, 420, 422, 424, 426, 428, 430) innerhalb der virtuellen physikalischen Umgebung (100, 400) anzuzeigen; und
vii) Übertragen des zweiten Anzeigesignals an die Anzeigevorrichtung (230); wobei dem Benutzer Fehler, Zugriffsmuster und Engpässe basierend auf Bewegungsmustern der virtuellen Partikel (120, 122, 420, 422, 424, 426, 428, 430) innerhalb der virtuellen physikalischen Umgebung (100, 400) und gleichzeitig die Datenbankaktivität auf der Ebene der einzelnen Transaktionen durch die Bewegungen der einzelnen Partikel (120, 122, 420, 422, 424, 426, 428, 430) angezeigt werden; und wobei, während ein virtuelles Partikel sichtbar ist, das virtuelle Partikel (120, 122, 420, 422, 424, 426, 428, 430) vom Benutzer wählbar ist, um Informationen über das virtuelle Partikel zu erhalten.

2. Verfahren nach Anspruch 1, wobei die Datenbank (220) eine relationale Datenbank ist und das virtuelle physikalische Objekt (110, 112, 410-416) einer Datenbanktabelle der Datenbank entspricht.

3. Verfahren nach Anspruch 1 oder 2, wobei die Datenbank (220) eine objektorientierte Datenbank ist und das virtuelle physikalische Objekt (110, 112, 410-416) einer Objektklasse der Datenbank entspricht.

4. Verfahren nach einem der Ansprüche 1 bis 3, wobei die Regeln der virtuellen physikalischen Umgebung (100, 400) gravitative oder thermodynamische oder elektromagnetische oder elektrostatische oder quantenmechanische Effekte simulieren.

5. Verfahren nach Anspruch 4, wobei die virtuellen Partikel (120, 122, 420, 422, 424, 426, 428, 430) mindestens einen von einem simulierten Massenparameter, einem simulierten elektrischen Ladungsparameter, einer Position, einer Geschwindigkeit, einer Beschleunigung oder einer Dauer umfassen; und/oder wobei das virtuelle physikalische Objekt (110, 112, 410-416) mindestens einen von einem simulierten Massenparameter, einem simulierten elektromagnetischen Parameter, einem simulierten elektrostatischen Ladungsparameter umfasst.

6. Verfahren nach Anspruch 4, wobei:
i) die virtuelle physikalische Umgebung (100, 400) gravitativ ist;
ii) das virtuelle physikalische Objekt (110, 112, 410-416) eine simulierte Masse aufweist;
iii) die virtuellen Partikel (120, 122, 420, 422, 424, 426, 428, 430) eine simulierte Masse aufweisen;
iv) das virtuelle physikalische Objekt (110, 112, 410-416) an seiner Position befestigt ist;
und
v) eine Bewegung der virtuellen Partikel (120, 122, 420, 422, 424, 426, 428, 430) durch eine simulierte Gravitationskraft in Richtung des virtuellen physikalischen Objekts (110, 112, 410-416) bestimmt wird.

7. Verfahren nach einem der Ansprüche 1 bis 6, weiter umfassend mindestens eines von:
i) Ändern einer Farbe oder Helligkeit der angezeigten virtuellen Partikel (120, 122, 420, 422, 424, 426, 428, 430),
ii) Ändern der Form der angezeigten virtuellen Partikel (120, 122, 420, 422, 424, 426, 428, 430),
oder
iii) Ausblenden der angezeigten virtuellen Partikel (120, 122, 420, 422, 424, 426, 428, 430).

8. Verfahren nach einem der Ansprüche 1 bis 7, weiter umfassend das Empfangen eines Signals und das Ändern eines Blickpunktes der angezeigten virtuellen physikalischen Umgebung (100, 400), basierend zumindest teilweise auf dem Signal.

9. Verfahren nach einem der Ansprüche 1 bis 8, wobei die virtuelle physikalische Umgebung (100, 400) eine Vielzahl von:
virtuellen physikalischen Objekten (110, 112, 410-416) umfasst, wobei jedes der Vielzahl von virtuellen physischen Objekten einem jeweiligen Datenbankobjekt der Datenbank (220) zugeordnet sind;
und wobei verschiedene der Vielzahl von Partikeln (120, 122, 420, 422, 424, 426, 428, 430) verschiedenen der virtuellen physikalischen Objekte (110, 112, 410-416) zugeordnet sind.

10. Verfahren nach einem der Ansprüche 1 bis 9, weiter umfassend das Empfangen einer Auswahl von:
i) dem mindestens einen virtuellen physikalischen Objekt (110, 112, 410-416);
und/oder,
ii) dem virtuellen Partikel (120, 122, 420, 422, 424, 426, 428, 430).
und Erzeugen eines dritten Anzeigesignals, das konfiguriert ist, um eine Anzeige von Parametern zu bewirken, die der Auswahl zugeordnet sind, und um das dritte Anzeigesignal an die Anzeigevorrichtung (230) zu übertragen.

11. Verfahren nach einem der vorstehenden Ansprüche, weiter umfassend das Aufzeichnen der Animation der virtuellen physikalischen Umgebung (100, 400).

12. Verfahren nach einem der vorstehenden Ansprüche, wobei die Art des Zugriffsereignisses umfasst:
i) ein Einfügungsereignis, und wobei das Erzeugen der Animation konfiguriert ist, um die Anzeige (230) zu veranlassen, ein virtuelles Partikel (420, 422, 424, 426, 428, 430) anzuzeigen, das in einem Startbereich (402) erscheint und sich in Richtung des virtuellen physikalischen Objekts (410-416) bewegt;
und/oder
ii) ein Löschungsereignis, und wobei das Erzeugen der Animation konfiguriert ist, um die Anzeige zu veranlassen, ein Partikel anzuzeigen, das aus dem Objekt ausbricht und gelöscht wird.
und/oder
iii) ein Leseereignis, und wobei das Erzeugen der Animation konfiguriert ist, um zu bewirken, dass die Anzeige ein virtuelles Partikel (420, 422, 424, 426, 428, 430) anzeigt, das virtuell aus dem virtuellen physikalischen Objekt (410-416) ausbricht.

13. Rechnersystem zum Visualisieren der Datenbanknutzung, umfassend:
i) einen Rechner (210) mit einem Prozessor (212), einem Speicher (214) und einer Grafikverarbeitungseinheit (216);
ii) wobei der Rechner in Kommunikation mit einer Datenbank (220) und einer Anzeige (230) steht;
wobei der Rechner mit einem Code programmiert ist, um den Prozessor zu veranlassen, das in einem der Ansprüche 1 bis 13 beanspruchte Visualisierungsverfahren zur Datenbanknutzung auszuführen.

14. Computerlesbares Medium, umfassend Anweisungen, die, wenn sie von einem Rechner ausgeführt werden, bewirken, dass der Rechner das in einem der Ansprüche 1 bis 13 beanspruchte Visualisierungsverfahren für die Datenbanknutzung durchführt.

## Revendications

1. Procédé de visualisation de l'utilisation d'une base de données à effectuer par un ordinateur (210) qui est en communication locale ou à distance avec une base de données, ledit procédé comprenant :
i) la détermination du type d'un événement d'accès de base de données et la détermination d'un enregistrement de base de données affecté par l'événement d'accès ;
ii) la génération d'un premier signal d'affichage configuré pour amener un dispositif d'affichage (230) couplé à une unité de traitement graphique (216) dudit ordinateur à afficher un environnement physique virtuel (100, 400) simulant un système physique et comprenant un objet physique virtuel (110, 112, 410 - 416) correspondant à un objet de base de données comprenant ou qui doit comprendre l'enregistrement de base de données affecté par l'événement d'accès ; et
iii) la transmission du premier signal d'affichage au dispositif d'affichage (230) ;
**caractérisé en ce que** le procédé comprend en outre :
iv) la configuration du premier signal d'affichage pour amener le dispositif d'affichage (230) à afficher une pluralité de particules virtuelles (120, 122, 420, 422, 424, 426, 428, 430) dans l'environnement physique virtuel (100, 400), chaque particule virtuelle (120, 122, 420, 422, 424, 426, 428, 430) correspondant audit enregistrement de base de données affecté par ledit événement d'accès ;
v) la détermination d'un mouvement de chaque particule virtuelle (120, 122, 420, 422, 424, 426, 428, 430) par rapport à l'objet physique virtuel (110, 112, 410 - 416) au sein de l'environnement physique virtuel (100, 400), sur la base de règles de l'environnement physique virtuel (100, 400) et des types d'événements d'accès de base de données ;
vi) la génération d'un deuxième signal d'affichage configuré pour amener le dispositif d'affichage (230) à afficher une animation du mouvement des particules virtuelles (120, 122, 420, 422, 424, 426, 428, 430) au sein de l'environnement physique virtuel (100, 400) ; et
vii) la transmission du deuxième signal d'affichage au dispositif d'affichage (230) ; moyennant quoi des erreurs, des motifs d'accès et des goulots d'étranglement sont affichés à l'utilisateur sur la base de motifs de mouvement des particules virtuelles (120, 122, 420, 422, 424, 426, 428, 430) au sein de l'environnement physique virtuel (100, 400) et simultanément l'activité de la base de données est présentée au niveau de transactions individuelles par les mouvements des particules individuelles (120, 122, 420, 422, 424, 426, 428, 430) ; et tant qu'une particule virtuelle est visible, la particule virtuelle (120, 122, 420, 422, 424, 426, 428, 430) peut être sélectionnée par l'utilisateur pour obtenir des informations concernant la particule virtuelle.

2. Procédé selon la revendication 1 dans lequel la base de données (220) est une base de données relationnelle et l'objet physique virtuel (110, 112, 410 - 416) correspond à une table de base de données de la base de données.

3. Procédé selon la revendication 1 ou 2 dans lequel la base de données (220) est une base de données orientée objet et l'objet physique virtuel (110, 112, 410 - 416) correspond à une classe d'objet de la base de données.

4. Procédé selon l'une quelconque des revendications 1 à 3 dans lequel les règles de l'environnement physique virtuel (100, 400) simulent des effets gravitationnels ou thermodynamiques ou électromagnétiques ou électrostatiques ou de mécanique quantique.

5. Procédé selon la revendication 4, dans lequel les particules virtuelles (120, 122, 420, 422, 424, 426, 428, 430) comprennent au moins l'un parmi un paramètre de masse simulée, un paramètre de charge électrique simulée, une position, une vitesse, une accélération, ou une durée ; et/ou dans lequel l'objet physique virtuel (110, 112, 410 - 416) comprend au moins l'un parmi un paramètre de masse simulée, un paramètre électromagnétique simulé, un paramètre de charge électrostatique simulée.

6. Procédé selon la revendication 4, dans lequel :
i) l'environnement physique virtuel (100, 400) est gravitationnel ;
ii) l'objet physique virtuel (110, 112, 410 - 416) a une masse simulée ;
iii) les particules virtuelles (120, 122, 420, 422, 424, 426, 428, 430) ont une masse simulée ;
iv) l'objet physique virtuel (110, 112, 410 - 416) est fixé à son emplacement ; et,
v) le mouvement des particules virtuelles (120, 122, 420, 422, 424, 426, 428, 430) est déterminé par une force gravitationnelle simulée dirigée vers l'objet physique virtuel (110, 112, 410-416).

7. Procédé selon l'une quelconque des revendications 1 à 6, comprenant en outre au moins l'un parmi :
i) le changement d'une couleur ou d'une luminosité des particules virtuelles (120, 122, 420, 422, 424, 426, 428, 430) affichées,
ii) le changement de la forme des particules virtuelles (120, 122, 420, 422, 424, 426, 428, 430) affichées,
ou
iii) le fait de cacher les particules virtuelles (120, 122, 420, 422, 424, 426, 428, 430) affichées.

8. Procédé selon l'une quelconque des revendications 1 à 7 comprenant en outre la réception d'un signal et le changement d'un point de perspective de l'environnement physique virtuel (100, 400) affiché sur la base au moins en partie du signal.

9. Procédé selon l'une quelconque des revendications 1 à 8, dans lequel environnement physique virtuel (100, 400) comprend une pluralité :
d'objets physiques virtuels (110, 112, 410 - 416), chacun de la pluralité d'objets physiques virtuels étant associé à un objet de base de données respectif de la base de données (220) ;
et/des particules différentes de la pluralité de particules (120, 122, 420, 422, 424, 426, 428, 430) sont associées à des objets physiques virtuels différents des objets physiques virtuels (110, 112, 410 - 416).

10. Procédé selon l'une quelconque des revendications 1 à 9 comprenant en outre la réception d'une sélection de :
i) l'au moins un objet physique virtuel (110, 112, 410 - 416) ;
et/ou
ii) la particule virtuelle (120, 122, 420, 422, 424, 426, 428, 430)
et la génération d'un troisième signal d'affichage configuré pour amener un affichage de paramètres associés à la sélection et la transmission du troisième signal d'affichage au dispositif d'affichage (230).

11. Procédé selon l'une quelconque des revendications précédentes comprenant en outre l'enregistrement de l'animation de l'environnement physique virtuel (100, 400).

12. Procédé selon l'une quelconque des revendications précédentes, dans lequel le type d'événement d'accès comprend :
i) un événement d'insertion, et dans lequel la génération de l'animation est configurée pour amener l'affichage (230) à présenter ladite particule virtuelle (420, 422, 424, 426, 428, 430) apparaissant au sein d'une région de départ (402) et se déplaçant vers l'objet physique virtuel (410 - 416) ;
et/ou
ii) un événement de suppression, et dans lequel la génération de l'animation est configurée pour amener l'affichage à présenter ladite particule jaillissant à partir de l'objet et étant supprimée
et/ou
iii) un événement de lecture et la génération de l'animation est configurée pour amener l'affichage à présenter ladite particule virtuelle (420, 422, 424, 426, 428, 430) jaillissant de manière virtuelle à partir de l'objet physique virtuel (410 - 416).

13. Système informatique pour visualiser l'utilisation d'une base de données comprenant :
i) un ordinateur (210) ayant un processeur (212), une mémoire (214) et une unité de traitement graphique (216) ;
ii) l'ordinateur étant en communication avec une base de données (220) et un affichage (230) ;
dans lequel l'ordinateur est programmé avec un code pour amener le processeur à exécuter le procédé de visualisation de l'utilisation d'une base de données selon l'une quelconque des revendications 1 à 13.

14. Support lisible par ordinateur comprenant des instructions qui, quand elles sont exécutées par un ordinateur, amènent l'ordinateur à mettre en oeuvre le procédé de visualisation de l'utilisation d'une base de données selon l'une quelconque des revendications 1 à 13.
